Europäisches Patentamt

European Patent Office

Office européen des brevets

(11) Veröffentlichungsnummer: **0 110 111**
**B1**

# (12) EUROPÄISCHE PATENTSCHRIFT

(45) Veröffentlichungstag der Patentschrift:
19.03.86

(21) Anmeldenummer: 83110558.0

(22) Anmeldetag: 22.10.83

(51) Int. Cl.⁴: **C 02 F 1/52**, G 05 D 21/02,
**C 02 F 1/68**

(54) Verfahren und Anlage zur Steuerung von Dosiereinrichtungen für Behandlungsmittel in Abwasserreinigungsanlagen.

(30) Priorität: 11.11.82 DE 3241678

(43) Veröffentlichungstag der Anmeldung:
13.06.84 Patentblatt 84/24

(45) Bekanntmachung des Hinweises auf die Patenterteilung:
19.03.86 Patentblatt 86/12

(84) Benannte Vertragsstaaten:
CH DE LI NL SE

(56) Entgegenhaltungen:
FR - A - 2 132 392
FR - A - 2 146 533
US - A - 3 605 775
US - A - 4 345 996

AUFBEREITUNGS-TECHNIK, Band 15, Nr. 4, April 1974, Seiten 187,192-193, Wiesbaden, DE. J. REUTER:
"Möglichkeiten zur Automatisierung des Betriebes von Kläreindickern in Aufbereitungsanlagen durch Anwendung organischer synthetischer Flockungsmittel"
Seiten 187, 192-193
SIEMENS ZEITSCHRIFT, Band 49, Nr. 7, 1975, Seiten 491-498, Erlangen, DE. E. MICHEL:
"Automatisierungsmittel in der Abwassertechnik"
G.W.F. WASSER-ABWASSER, Band 123, Nr. 3, März 1982, Seiten 131-138, München, DE. K. AHRENS et al.:

(73) Patentinhaber: HOECHST AKTIENGESELLSCHAFT,
Postfach 80 03 20, D-6230 Frankfurt am Main 80 (DE)

(72) Erfinder: Gleisberg, Dietrich, Dr., Falkenweg 12,
D-5042 Erftstadt (DE)
Erfinder: Valentin, Hans-Wilhelm, Nelkenstrasse 50,
D-5354 Weilerswist (DE)
Erfinder: Peantek, Günter, Am Hostert 12,
D-5353 Mechernich-Kommern (DE)

(56) Entgegenhaltungen: (Fortsetzung)
"Überwachung der Flockung bei der Wasseraufbereitung mit Hilfe eines rechnergesteuerten physikalischen Modells"
ADV. IN INSTRUM., Band 33, Teil 3, 1978, Seiten 79-88, Pittsburgh; USA R.E. RICE et al.: "Direct digital control of a vacuum filer"

## Beschreibung

Die vorliegende Erfindung betrifft ein Verfahren zur Steuerung von mindestens einer Dosiereinrichtung für Behandlungsmittel bei der Fällungsreinigung zur Phosphatentfernung aus Abwasser, wobei man von dem in eine Reaktionszone einlaufenden Abwasser die Menge und die Konzentration mindestens einer seiner Verunreinigungen kontinuierlich mißt und wobei man aus den Meßwerten der Menge und der Verunreinigungskonzentration durch Multiplikation fortwährend den Verunreinigungsfrachtwert bildet und wobei man die Konzentration mindestens einer Verunreinigung des aus der Reaktionszone ablaufenden Wassers kontinuierlich mißt sowie eine Anlage zu seiner Durchführung.

Aus der FR-A-2 132 392 sind ein Verfahren und eine Vorrichtung zum Vermindern der Phosphatkonzentration von Abwasser mit einem chemischen Fällungsmittel, beispielsweise Salzen des Aluminiums, Eisens oder Chroms bekannt. Dabei wird in einer zur Reaktionszone führenden Leitung die Menge und die Phosphatkonzentration des einlaufenden Abwassers kontinuierlich gemessen und die in elektrische Impulse umgewandelten Meßwerte werden in einen Rechner eingegeben. Ebenfalls wird die Phosphatkonzentration in dem aus der Reaktionszone abströmenden Wasser kontinuierlich ermittelt und die Meßwerte werden nach Umwandlung in elektrische Impulse in den Rechne eingegeben. Der Rechner seinerseits gibt Steuersignale aus, durch welche die Menge des zuzusetzenden fällungsmittels gesteuert wird.

In ''Aufbereitungstechnik'', Band 15, Nr. 4, 1974, Seite 192 wird die Regelung der Dosierung eines Flockungsmittels in Abhängigkeit von der einem Kläreindicker zulaufenden Feststoffmenge beschrieben. Dabei wird zunächst die dem Eindicker zufließende Feststoffmenge dadurch ermittelt, daß in der Abwasserzulaufleitung zum Eindicker Meßstellen für den Volumenstrom und die Trübedichte angeordnet sind, deren proportional verstärkte Meßströme in einen Multiplikator eingegeben werden. Die auf diese Weise ermittelte Feststoffmenge ist der Istwert, welcher anhand einer vorher aufgestellten Eichkurve ''Flockungsmittelbedarf in Abhängigkeit vom Feststoffgehalt der Trübe'' laufend überprüft wird. Bei Abweichung der Flockungsmitteldosierung von der Menge, welche für die augenblicklich zulaufende Feststoffmenge erforderlich ist, gibt der Multiplikator einen Stellbefehl an die Flockungsmitteldosierpumpe, durch den die Flockungsmittelmenge auf den gewünschten Wert einreguliert wird.

In der ''Siemens Zeitschrift'', Band 49, Nr. 7, 1975, Seiten 491 bis 496, ist das Schema einer zweistufigen Kläranlage abgebildet und erläutert. Während aus dem Abwasser in der ersten Stufe grobe Bestandteile, Sand und Schlamm mit Hilfe einer Rechenanlage, einem Sandfang und einem Vorklärbecken mechanisch entfernt werden, wird das so vorgereinigte Abwasser in einer zweiten Stufe in einer Belebungsanlage mit Hilfe von Mikroorganismen biologisch aufgearbeitet. In der Zuführungsleitung für das vorgereinigte Abwasser zum Belebungsbecken sind ein Durchflußmengenmesser und eine Einrichtung zur Bestimmung des chemischen Sauerstoffbedarfes CSB installiert. Aus beiden Messwerten wird in einem Rechner das Produkt CSB.F gebildet, welches in guter Näherung den Sauerstoffbedarf für den Abbau der organischen Stoffe im Belebungsbecken wiedergibt. Mit der Führungs-größe CSB.F wird die Stellung der Drosselklappen in den Luftzuführungsleitungen geregelt, welche den Boden des Belebungsbeckens durchdringen.

Schließlich ist es bekannt, Meßwerte von Verunreinigungen, welche in Reinigungsanlagen zulaufendem Abwasser ermittelt worden sind, zur Steuerung beispielsweise von Pumpen in Abwasserreinigungsanlagen direkt einzusetzen. Will man jedoch Verunreinigungen aus Abwasser durch fällung entfernen, so ist diese Verfahrensweise unzulänglich, weil das Hauptkriterium für die Dosierung des Fällmittels die Verunreinigungsfracht ist, deren faktoren Verunreinigungskonzentration im Abwasser und Abwassermenge in der Regel starken zeitlichen Schwankungen unterliegen.

Es ist daher Aufgabe der vorliegenden Erfindung, ein Verfahren zur Steuerung von Dosiereinrichtungen für Behandlungsmittel bei der fällungsreinigung zur Phosphatentfernung aus Abwasser sowie eine Anlage zu seiner Durchführung anzugeben, bei welchen die im Abwasser ermittelten Meßwerte seiner Verunreinigungen derart ausgewertet werden, daß den Einflüssen eines sich ständig bezüglich Menge und Verunreinigungsgrad ändernden Abwassers im Hinblick auf seine optimale Reinigung Rechnung getragen wird. Das wird erfindungsgemäß dadurch erreicht, daß man den Verunreinigungsfrachtwert mit einem faktor multipliziert, welcher einerseits in Abhängigkeit von der Änderung der Konzentration der Verunreinigungen im in die Reaktionszone einlaufenden Abwasser und andererseits durch den kontinuierlich durchgeführten Vergleich zwischen einem vorgegebenen Soll-Wert und dem Ist-Wert der Konzentration mindestens einer Verunreinigung des aus der Reaktionszone ablaufenden Wassers verändert wird; und daß der mit dem faktor multiplizierte Verunreinigungsfrachtwert das Steuersignal für Stellbefehle an mindestens eine Dosiereinrichtung für Behandlungsmittel liefert.

Das Verfahren gemäß der Erfindung kann weiterhin wahlweise auch noch dadurch ausgestaltet sein, daß

a) der faktor in Abhängigkeit von der Änderung weiterer, im in die Reaktionszone einlaufenden Abwasser kontinuierlich ermittelter Meßwerte verändert wird;

b) der faktor in Abhängigkeit vom pH-Wert verändert wird.

Eine Anlage zur Durchführung des erfindungsgemäßen Verfahrens, welche aus einer in einen Reaktionsbehälter einmündenden Abwasser-Einlaufleitung und einer mit dem Reaktionsbehälter strömungsmäßig verbundenen Wasser-Ablaufleitung besteht, wobei in den Reaktionsbehälter mindestens eine mit einer Dosiereinrichtung strömungsmäßig verbundene Zuführungsleitung für Behandlungsmittel hineinführt und wobei in die Abwasser-Einlaufleitung ein Durchflußmengen-messer F 1 und ein erstes Analysengerät Q 1 sowie in die Wasser-Ablaufleitung ein zweites Analysengerät Q 2 eingebaut sind und wobei ein Reglerteil vorgesehen ist, in welchem die vom Durchflußmengenmesser F 1 sowie von den beiden Analysengeräten Q 1 und Q 2 ermittelten Werte zu einem Steuersignal verarbeitet werden, das auf mindestens eine Dosiereinrichtung einwirkt, kann dadurch gekennzeichnet sein, daß in die Abwasser-Einlaufleitung ein pH-Meter Q 3 eingebaut ist, welches mit dem Reglerteil elektrisch leitend verbunden ist; daß der Reglerteil einen PID-Regler sowie Rechner, K und (-K) sowie ein Verarbeitungsglied enthält, wobei der Rechner aus der vom ersten Analysengerät Q 1 ermittelten Verunreinigungskonzentration und der vom Durchflußmengenmesser F 1 ermittelten Menge des Abwassers den Verunreinigungsfrachtwert berechnet und wobei in den PID-Regler das Signal des zweiten Analysengerätes Q 2 zur Ermittlung eines Vergleichswertes W 2 zwischen einem Sollwert und einem Istwert mindestens einer Verunreinigung des aus dem Reaktionsbehälter ablaufenden Wassers eingegeben wird und wobei in den Rechner K das Signal des pH-Meters Q 3 eingegeben wird und wobei in den Rechner (-K) das Signal des ersten Analysengerätes Q 1 zur Ermittlung eines von der Konzentration der Verunreinigungen im in den Reaktionsbehälter einlaufenden Abwasser abhängigen Wertes W 1 eingegeben wird; und daß die Signale der Ausgänge des PID-Reglers sowie der Rechner, K und (-K) durch das Verarbeitungsglied additiv zu einem Steuersignal verknüpft werden.

Die genannte Anlage kann wahlweise auch noch dadurch weitergebildet sein, daß

c) die in den Reaktionsbehälter hineinführende Fällmittel-Zuführungsleitung mit einem Lösungsbehälter verbunden ist;

d) in den Lösungsbehälter eine ein automatisch betätigbares Ventil aufweisende Lösewasser-Leitung einmündet; und daß oberhalb des Lösungsbehälters ein Bunker angeordnet ist, aus welchem über die mit einem Motor M 1 versehene erste Dosiereinrichtung dem Lösungsbehälter Fällmittel zuteilbar ist;

e) in der Lösewasser-Leitung ein Durchflußwächter FSA 2 eingebaut ist, durch welchen der Motor M 1 der ersten Dosiereinrichtung abgeschaltet wird, wenn in der Lösewasser-Leitung kein Wasser strömt;

f) das Steuersignal über ein Anpassungsglied S 1 auf den Motor M 1 der ersten Dosiereinrichtung einwirkt;

g) das Steuersignal über ein Verhältnisglied auf das automatisch betätigbare Ventil in der Lösewasser-Leitung einwirkt;

h) das Steuersignal über ein Anpassungsglied S 2 auf den Motor M 2 der zweiten Dosiereinrichtung einwirkt;

i) im Reglerteil in die den Rechner und das Verarbeitungsglied verbindende Leitung ein Schalter eingebaut ist, welcher durch eine Einrichtungen zur Minimalwertüberwachung und zur Ersatzwertvorgabe enthaltende erste Steuereinheit betätigbar ist und daß über den geöffneten Schalter ein Ersatzwert in das Verarbeitungsglied eingebbar ist;

j) in die das Steuersignal aus dem Reglerteil herausführende Leitung ein Schalter eingebaut ist, welcher durch eine Einrichtungen zur Minimalwertüberwachung und zur Ersatzwertvorgabe enthaltende zweite Steuereinheit betätigbar ist und daß über den geöffneten Schalter ein Ersatzwert in das Verhältnisglied sowie in die Anpassungsglieder S 1 und S 2 eingebbar ist.

Beim Verfahren gemäß der Erfindung wird bei der Fällungsreinigung von Abwasser, beispielsweise bei der Phosphatelimination durch Zugabe von Grünsalz ($FeSO_4 . 7 H_2O$), der Verunreinigungsfrachtwert zur Einstellung der Fällmitteldosierung gebildet, welcher mit dem Faktor des Molverhältnisses β der fällaktiven Kationen zum auszufällenden Anion multipliziert wird, wobei die Einstellung des Molverhältnisses ß durch Berücksichtigung des pH-Wertes des Abwassers sowie der Verunreinigungskonzentration im gereinigten Wasser laufend korrigiert wird.

Weiterhin kann beim erfindungsgemäßen Verfahren das gleiche Steuersignal zur Steuerung der Flockungshilfsmittelmenge sowie - bei Einsatz von festem Fällmittel - zur Steuerung der Lösewassermenge verwendet werden.

Bei Anwendung des Verfahrens gemäß der Erfindung zur Phosphatentfernung aus Abwasser in einer konventionellen kommunalen Kläranlage (ca. 240 000 Einwohner-Gleichwerte) wurden etwa 35 % des Fällmittels gegenüber der bekannten Festwertdosierung nach der maximalen Phosphat-Fracht bei Simulatanfällung eingespart.

Bei Anwendung des erfindungsgemäßen Verfahrens zur Phosphatentfernung aus kommunalem Abwasser mit einer Phosphat-Fracht von 60 bis 120 g/h und einem pH-Wert von 6 bis 8,5 in einer Trevira ®-Schwerkraft-Filter-Anlage wurden gegenüber der bekannten Festwertdosierung nach der maximalen Phosphat-Fracht etwa 40 % des Fällmittels eingespart: Dabei sank das Molverhältnis ß im Vergleich zur Steuerung der Anlage nach der Trübungsmessung im Mittel von 1,65 auf 1,05 ab. Der pH-Wert des aus der Anlage ablaufenden Wassers war durch die Fällmittelzugabe um etwa 0,5 abgesenkt, während seine Phosphat-Konzentration gleichbleibend bei ≤ 0,5 mg/l lag (im Gegensatz zur Festwertdosierung, wo die Phosphat- Konzentration des ablaufenden Wassers wegen der tatsächlichen Über- und Unterdosierung ⩾0,5 mg/l beträgt).

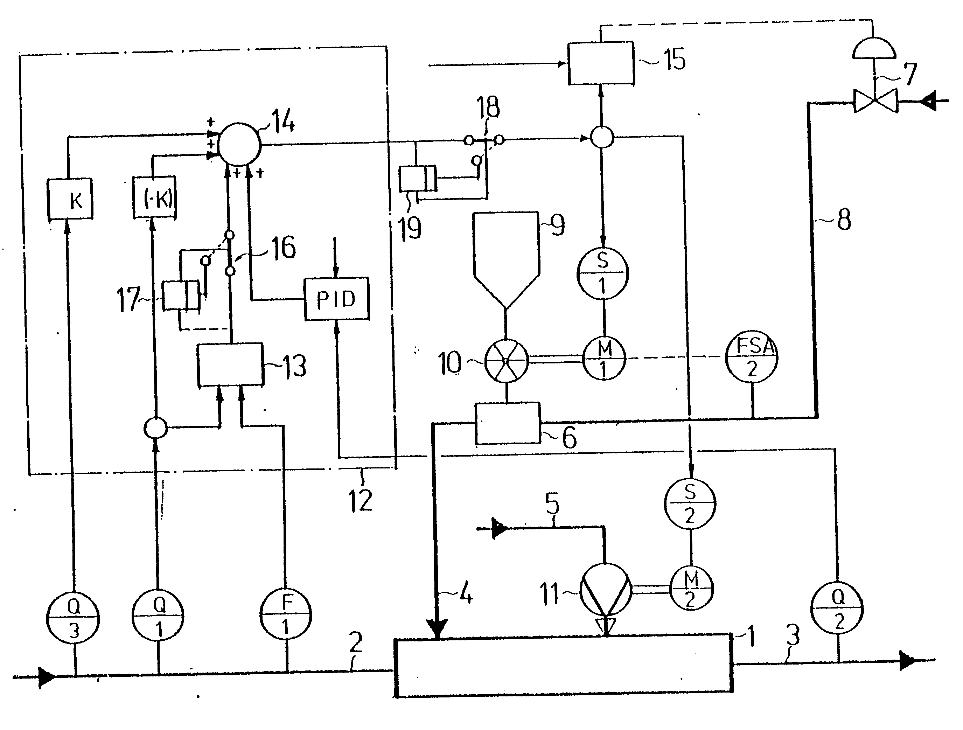

In der beigefügten Zeichnung ist eine Anlage zur Durchführung des erfindungsgemäßen Verfahrens schematisch dargestellt.

In einem Reaktionsbehälter 1 mündet eine Abwasser-Einlaufleitung 2 ein. Weiterhin ist der Reaktionsbehälter 1 mit einer Wasser-Ablaufleitung 3 strömungsmäßig verbunden. Schließlich führt in den Reaktionsbehälter 1 eine Fällmittel-Zuführungsleitung 4 und eine Flockungshilfsmittel-Zuführungsleitung 5 hinein.

In der Abwasser-Einlafleitung 2 wird kontinuierlich die durchströmende Abwassermenge mit Hilfe eines Durchflußmengenmessers F 1 und die Phosphatkonzentration des durchströmenden Abwassers mit einem Analysengerät Q 1 ermittelt. Schließlich wird der pH-Wert des durch die Abwasser-Einlaufleitung 2 strömenden Abwassers mit Hilfe des pH-Meters Q 3 kontinuierlich ermittelt.

Die Fällmittel-Zuführungsleitung 4 ist mit einem Lösungsbehälter 6 verbunden, in welchen eine ein automatisch betätigbares Ventil 7 aufweisende Lösewasser-Leitung 8 einmündet. Oberhalb des Lösungsbehälters 6 befindet sich ein Bunker 9, aus welchem Fällmittel über eine mit einem Motor M 1 versehene erste Dosiereinrichtung 10 dem Lösungsbehälter 6 zuteilbar ist. In der Flockungshilfsmittel-Zuführungsleitung 5 ist eine mit einem Motor M 2 versehene zweite Dosiereinrichtung 11 angeordnet.

Im Reglerteil 12 befindet sich ein PID-Regler, in welchem ein für die Phosphatkonzentration im aus dem Reaktionsbehälter 1 ablaufenden Wasser vorgegebener Sollwert mit dem durch ein in der Wasser-Ablaufleitung 3 befindliches Analysengerät Q 2 ermittelten Istwert verglichen wird. Weiterhin enthält der Reglerteil 12 einen Rechner 13, welcher aus den vom Durchflußmengenmesser F 1 und vom Analysengerät Q 1 ermittelten Werten die Phosphat-Fracht des einlaufenden Abwassers errechnet, während die Rechner K bzw. (-K) Konstanten für den Eingang des pH-Meters Q 3 bzw. des Analysengerätes Q 1 berechnen. Schließlich enthält der Reglerteil 12 ein Verarbeitungsglied 14, in welchem die Signale der Ausgänge des PID-Reglers sowie der Rechner 13, K und (-K) additiv zu einem Steuersignal verknüpft werden. Dieses Steuersignal wirkt über ein Anpassungsglied S 1 auf den Motor M 1 der Dosiereinrichtung 10 und gleichzeitig über Verhältnisglied 15, an welchem das Mengenverhältnis Wasser: Fällmittel vorgegeben werden kann, auf das automatisch betätigbare Regelventil 7 in der Lösewasser-Leitung 8. In gleicher Weise wirkt das Steuersignal über ein Anpassungsgleid S 2 auf den Motor M 2 der Dosiereinrichtung 11 in der Flockungshilfsmittel-Zuführungsleitung 5. In der Leitung, welche den Rechner 13 und das Verarbeitungsglied 14 elektrisch leitend miteinander verbindet, befindet sich ein durch ein nicht dargestelltes Relais betätigbarer Schalter 16. Der Schalter 16 erhält einen Öffnungsbefehl von der Einrichtungen zur Minimalwertüberwachung und zur Ersatzwertvorgabe enthaltenden ersten Steuereinheit 17,wenn die vom Rechner 13 ermittelte Phosphat-Fracht einen vorgegebenen Minimalwert unterschreitet. Mach Öffnung des Schalters 16 wird in das Verarbeitungsglied 14 anstelle des errechneten Wertes für die Phosphat-Fracht ein Ersatzwert eingegeben.

In der Leitung, welche das im Reglerteil 12 erzeugte Steuersignal zu dem Verhältnisglied 15 und dem Anpassungsgliedern S 1 und S 2 führt, ist ein durch ein nicht dargestelltes Relais betätigbarer Schalter 18 eingebaut. Der Schalter 18 erhält einen Öffnungsbefehl von der Einrichtungen zur Minimalwertüberwachung und zur Ersatzwertvorgabe enthaltenden zweiten Steuereinheit 19,wenn das Steuersignal ausfällt oder die Zugabe einer solchen Menge an Fällmittel veranlaßt, welche unterhalb der zur Flockung erforderlichen Grundmenge liegt. Mach Öffnung des Schalters 18 wird anstelle der vom Steuersignal veranlaßten zuzugebenen Menge an Fällmittel eine Menge gemäß einem Ersatzwert zugegeben. Dabei kann der Ersatzwert ein Festwert sein oder nach einer vorgegebenen Tagesganglinie gesteuert sein.

In die Lösewasser-Leitung 8 ist ein Durchflußwächter FSA 2 eingebaut, durch welchen die Dosiereinrichtung 10 abgeschaltet wird, wenn in der Lösewasser-Leitung 8 kein Wasser strömt. In diesem Fall wird gleichzeitig ein Alarm ausgelöst.

**Patentansprüche**

1. Verfahren zur Steuerung von mindestens einer Dosiereinrichtung für Behandlungsmittel bei der Fällungsreinigung zur Phosphatentfernung aus Abwasser, wobei man von dem in eine Reaktionszone einlaufenden Abwasser die Menge und die Konzentration mindestens einer seiner Verunreinigungen kontinuierlich mißt und wobei man aus den Meßwerten der Menge und der Verunreinigungskonzentration durch Multiplikation fortwährend den Verunreinigungsfrachtwert bildet und wobei man die Konzentration mindestens einer Verunreinigung des aus der Reaktionszone ablaufenden Wassers kontinuierlich mißt, dadurch gekennzeichnet, daß man den Verunreinigungsfrachtwert mit einem Faktor multipliziert, welcher einerseits in Abhängigkeit von der Änderung der Konzentration der Verunreinigungen im in die Reaktionszone einlaufenden Abwasser und andererseits durch den kontinuierlich durchgeführten Vergleich zwischen einem vorgegebenen Soll-Wert und dem Ist-Wert der Konzentration mindestens einer Verunreinigung des aus der Reaktionszone ablaufenden Wasser verändert wird; und daß der mit dem Faktor multiplizierte Verunreinigungsfrachtwert das Steuersignal für Stellbefehle an mindestens eine Dosiereinrichtung für Behandlungsmittel liefert.

2. Verfahren nach Anspruch 1, <u>dadurch gekennzeichnet</u>, daß der Faktor in Abhängigkeit von der Änderung weiterer, im in die Reaktionszone einlaufenden Abwasser kontinuierlich ermittelter Meßwerte verändert wird.

3. Verfahren nach Anspruch 2, <u>dadurch gekennzeichnet</u>, daß der Faktor in Abhängigkeit vom pH-Wert verändert wird.

4. Anlage zur Durchführung des Verfahrens nach den Ansprüchen 1 bis 3 bestehend aus einer in einen Reaktionsbehälter einmundenden Abwasser-Einlaufleitung und einer mit dem Reaktionsbehälter strömungsmäßig verbundenen Wasser-Ablaufleitung, wobei in den Reaktionsbehälter mindestens eine mit einer Dosiereinrichtung strömungsmäßig verbundene Zuführungsleitung für Behandlungsmittel hineinführt und wobei in die Abwasser-Einlaufleitung ein Durchfluß-mengenmesser F 1 und ein erstes Analysengerät Q 1 sowie in die Wasser-Ablaufleitung ein zweites Analysengerät Q 2 eingebaut sind und wobei ein Reglerteil vorgesehen ist, in welchem die vom Durchflußmengenmesser F 1 sowie von den beiden Analysengerätan Q 1 und Q 2 ermittelten Werte zu einem Steuersignal verarbeitet werden, das auf mindestens eine Dosiereinrichtung einwirkt, <u>dadurch gekennzeichnet</u>, daß in die Abwasser-Einlaufleitung (2) zusätzlich ein pH-Meter Q 3 eingebaut ist, welches mit dem Reglerteil (12) elektrisch leitend verbunden ist; daß der Reglerteil (12) einen PID-Regler sowie Rechner (13), K und (-K) sowie ein Verarbeitungsglied (14) enthält, wobei der Rechner (13) aus der vom ersten Analysengerät Q 1 ermittelten Verunreinigungskonzentration und der vom Durch-flußmengenmesser F 1 ermittelten Menge des Abwassers den Verunreinigungsfrachtwert berechnet und wobei in den PID-Regler das Signal des zweiten Analysengerätes Q 2 zur Ermittlung eines Vergleichswertes W2 zwischen einem Sollwert und einem Istwert mindestens einer Verunreinigung des aus dem Reaktionsbehälter (1) ablaufenden Wassers eingegeben wird und wobei in den Rechner K das Signal des pH-Meters Q 3 eingegeben wird und wobei in den Rechner (-K) das Signal des ersten Analysengerätes Q 1 zur Ermittlung eines von der Konzentration der Verunreinigungen im in den Reaktionsbehälter (1) einlaufenden Abwasser abhängigen Wertes WI eingegeben wird; und daß die Signale der Ausgänge des PID-Reglers sowie der Rechner (13), K und (-K) durch das Verarbeitungsglied (14) additiv zu einem Steuersignal verknüpft werden.

5. Anlage nach Anspruch 4, <u>dadurch gekennzeichnet</u>, daß die in den Reaktionsbehälter (1) hineinführende Fällmittel-Zuführungsleitung (4) mit einem Lösungsbehälter (6) verbunden ist.

6. Anlage nach Anspruch 5, <u>dadurch</u> gekennzeichnet, daß in den Lösungsbehälter (6) eine ein automatisch betätigbares Ventil (7) aufweisende Lösewasser-Leitung (8) einmündet; und daß oberhalb des Lösungsbehälters (6) ein Bunker (9) angeordnet ist, aus welchem über die mit einem Motor M 1 versehene erste Dosiereinrichtung (10) dem Lösungsbehälter (6) Fällmittel zuteilbar ist.

7. Anlage nach Anspruch 6, <u>dadurch gekennzeichnet</u>, daß in der Lösewasser-Leitung (8) ein Durchflußwächter FSA 2 eingebaut ist, durch welchen der Motor M 1 der ersten Dosiereinrichtung (10) abgeschaltet wird, wenn in der Lösewasser-Leitung (8) kein Wasser strömt.

8. Anlage nach einem der Ansprüche 4 bis 7, <u>dadurch gekennzeichnet</u>, daß das Steuersignal über ein Anpassungsglied S 1 auf den Motor M 1 der ersten Dosiereinrichtung (10) einwirkt.

9. Anlage nach einem der Ansprüche 4 bis 8, <u>dadurch gekennzeichnet</u>, daß das Steuersignal über ein Verhältnisglied (15) auf das automatisch betätigbare Ventil (7) in der Lösewasser-Leitung (8) einwirkt.

10. Anlage nach einem der Ansprüche 4 bis 9, <u>dadurch gekennzeichnet</u>, daß das Steuersignal über ein Anpassungsglied S 2 auf den Motor M 2 der zweiten Dosiereinrichtung (11) einwirkt.

11. Anlage nach einem der Ansprüche 4 bis lo, <u>dadurch gekennzeichnet</u>, daß im Reglerteil (12) in die den Rechner (13) und das Verarbeitungsglied (14) verbindende Leitung ein Schalter (16) eingebaut ist, welcher durch eine Einrichtungen zur Minimalwertüberwachung und zur Ersatzwertvorgabe enthaltende erste Steuereinheit (17) berätigbar ist, und daß über den geöffneten Schalter (16) ein Ersatzwert in das Verarbeitungsglied (14) eingebbar ist.

12. Anlage nach einem der Ansprüche 4 bis 11, <u>dadurch gekennzeichnet</u>, daß in die das Steuersignal aus dem Reglerteil (12) herausführende Leitung ein Schalter (18) eingebaut ist, welcher durch eine Einrichtungen zur Minimalwertüberwachung und zur Ersatzwertvorgabe enthaltende zweite Steuereinheit (19) betätigbar ist, und daß über den geöffneten Schalter (18) ein Ersatzwert in das Verhältnisglied (15) sowie in die Anpassungsglieder S 1 und S 2 eingebbar ist.

## Claims

1. Process for controlling at least one dosing device supplying a treating agent for the removal of phosphate from waste water by purification by precipitation, which provides for the waste water quantity and the concentration of at least one of the contaminants in the waste water admitted to a reaction zone to be continuously metered, for the contaminant load value to be continuously formed by multiplying the values metered for the contaminant throughput and concentration of the contaminants, and for the concentration of at least one of the contaminants present in the effluent waste water coming from the reaction zone to be continuously metered, characterized in that the contaminant load value is multiplied by a factor varied responsively, on the one hand, to the variation of the concentration of the contaminants present in the waste water flowing into the reaction zone and, on the other hand, to a continuously effected comparison of a predetermined nominal value with the actual value metered for the concentration of at least one of the contaminants present in the effluent waste water coming from the reaction zone; and in that the contaminant load value multiplied by the said factor produces a control signal causing adjustment instructions to be given to at least one dosing device supplying the treating agent.

2. Process as claimed in claim 1, wherein the factor is varied responsively to the variation of further values continuously metered for the waste water flowing into the reaction zone.

3. Process as claimed in claim 2, wherein the factor is varied, responsively to the pH-value.

4. Apparatus for carrying out the process as claimed in claims 1 to 3, comprised of: a waste water-inlet opening into a reactor and a waste water-outlet connected downstream, in the direction of flow, to the reactor; at least one treating agent-inlet connected downstream, in the direction of flow, to a dosing device opening into the reactor; a flowmeter F 1 and a first analyzer Q 1 being installed in the waste water inlet and a second analyzer Q 2 being installed in the waste water outlet; and comprised of a control system in which the values determined by the flowmeter F 1 as well as by the two analyzers Q 1 and Q 2 are transformed into a control signal acting upon at least one dosing device, characterized in that a pH-meter Q 3 electrically connected to the control system (12) is additionally installed in the waste water-inlet (2); in that the control system (12) comprises a PID-control and computers (13), K and (-K) as well as a processing unit (14), the computer (13) computing the contaminant load value from the contaminant concentration metered by the first analyzer Q 1 and the waste water quantity metered by the flow meter F 1,the PIDcontrol receiving the signal emitted from the second analyzer Q 2 for establishing a value W 2 by comparison of a nominal value with the value actually metered for at least one of the contaminants contained in the effluent water coming from the reactor (1), and the computer K receiving the signal emitted from the pHmeter Q 3, and the computer (-K) receiving the signal emitted from the first analyzer Q 1 for establishing a value W 1 responding to the concentration of the contaminants contained in the waste water admitted to the reactor (1); and in that the signals emitted from the PID-control and computers (13), K and (-K) are additively made into a control signal, by the processing unit (14).

5. Apparatus as claimed in claim 4, wherein the inlet (4) for precipitant opening into reactor (1) is connected to a dissolving reservoir (6).

6. Apparatus as claimed in claim 5, wherein a dissolving water inlet (8) provided with an automatically actuated valve (7) is arranged to open into the disssolving reservoir (6); and wherein a bunker (9) permitting precipitant to be introduced into the dissolving reservoir (6) by means of a first dosing device (10) provided with a motor M 1, is arranged above the dissolving reservoir (6).

7. Apparatus as claimed in claim 6, wherein the dissolving water inlet (8) has a flow monitor FSA 2 installed in it switching off motor M 1 of the first dosing device (10) when water ceases to flow through the dissolving water inlet (8).

8. Apparatus as claimed in any one of claims 4 to 7, wherein an adapter S 1 causes the control signal to act upon the motor M 1 forming part of the first dosing device (10).

9. Apparatus as claimed in any one of claims 4 to 8, wherein a proportionality element (15) causes the control signal to act upon the automatically actuated valve (7) installed in the dissolving water inlet (8).

10. Apparatus as claimed in any one of claims 4 to 9, wherein an adapter S 2 causes the control signal to act upon the motor M 2 forming part of the second dosing device (11).

11. Apparatus as claimed in any one of claims 4 to 10, wherein a switch (16) is installed in control system (12) in the line connecting the computer (13) to processing unit (14), the switch (16) being actuated by means of a first control unit (17) provided with an installation monitoring minimum values and furnishing substitute values, and wherein the opened valve (16) permits a substitute value to be communicated to the processing unit (14).

12. Apparatus as claimed in any one of claims 4 to 11, wherein a switch (18) is installed in the line leading the control signal out of the control system (12), the switch (18) being actuated by means of a second control unit (19) provided with an installation monitoring minimum values and furnishing substitute values, and wherein the opened valve (18) permits a substitute value to be communicated to the proportionality element (15) and to the adapters S 1 and S 2.

**Revendications**

1. Procédé de réglage d'au moins un dispositif de dosage d'agents de traitement pour l'élimination de phosphates d'eaux résiduaires par purification par précipitation, dans lequel on mesure en continu le débit d'eau résiduaire et la concentration d'au moins l'une des impuretés contenues dans l'eau résiduaire amenée à une zone de réaction, on forme en continu la valeur de charge en impuretés par multiplication des valeurs mesurées pour le débit et la concentration des impuretés et on mesure en continu la concentration d'au moins l'une des impuretés présentes dans l'eau résiduaire s'écoulant de la zone de réaction, caractérisé en ce que l'on multiplie la valeur de charge des impuretés par un facteur varié, d'une part, en fonction de la variation de la concontration des impuretés présentes dans l'eau résiduaire entrant dans la zone de réaction et, d'autre part, d'une comparaison effectuée en continu d'une valeur de consigne déterminée au préalable avec la valeur effective de la concentration d'au moins une impureté dans l'eau résiduaire s'écoulant de la zone de réaction; et en ce que la valeur de charge des impuretés multipliée par ledit facteur fournit le signal de réglage déclenchant des ordres de réglage pour au moins un dispositif de dosage d'agents de traitement.

2. Procédé selon la revendication 1, caractérisé en ce que le facteur est varié en fonction de la variation de valeurs de mesure supplémentaires déterminées en continu pour l'eau résiduaire entrant dans la zone de réaction.

3. Procédé selon la revendication 2, caractérisé en ce que le facteur est varié en fonction du pH.

4. Appareillage destiné à la mise en oeuvre du procédé selon les revendications 1 à 3, comportant une conduite d'amenée d'eau résiduaire débouchant dans un réacteur et une conduite de sortie d'eau résiduaire, reliée, dans le sens de l'écoulement, au réacteur; au moins une conduite d'amenée d'agents de traitement reliée, dans le sens de l'écoulement, à un dispositif de dosage débouchant dans le réacteur; un débitmetre F 1 et un premier dispositif d'analyse Q 1 étant installés dans la conduite d'amenée de l'eau résiduaire et un second dispositif d'ahalyse Q 2 étant installé dans la conduite de sortie de l'eau résiduaire; et un système régulateur dans lequel les valeurs déterminées par le débitmetre F 1 ainsi que par les deux dispositifs d'analyse Q 1 et Q 2 sont transformées en un signal de réglage agissant sur au moins un dispositif de dosage, caractérisé en ce qu'un pH-mètre supplémentaire Q 3 relié électriquement au système régulateur (12) est agencé dans la conduite d'amenée de l'eau résiduaire (2); en ce que le système régulateur (12) comporte un régulateur PID ou régulateur à action proportionnelle, par intégration et par différentiation, ainsi que des calculatrices (13), K et (-K), de même qu'un organe de traitement (14), la calculatrice (13) calculant la valeur de charge des impuretés à partir de la concentration d'impuretés déterminée par le premier dispositif d'analyse Q 1 et du débit d'eau résiduaire mesuré par le débitmetre F 1, le régulateur PID recevant le signal émis par le second dispositif d'analyse Q 2 pour établir une valeur W 2 par comparaison d'une valeur de consigne avec la valeur effective d'au moins l'une des impuretés contenues dans l'eau s'écoulant du réacteur (1), et la calculatrice K recevant le signal émis par le pH-metre Q 3 et la calculatrice (-K) recevant le signal émis par le premier dispositif d'analyse Q 1 pour établir une valeur W 1 fonction de la concentration des impuretés dans l'eau résiduaire entrant dans le réacteur (1); et en ce que les signaux émis par le régulateur PID et les calculatrices (13), K et (-K) sont combinés par cumul en un signal de réglage par l'organe de traitement (14).

5. Appareillage selon la revendication 4, caractérisé en ce que la conduite d'amenée (4) d'agent de précipitation débouchant dans le réacteur (1) est reliée à un réservoir de mise en solution (6).

6. Appareillage selon la revendication 5, caractérisé en ce qu'une conduite d'eau de dissolution (8) munie d'une soupape à commande automatique (7) débouche dans le réservoir de mise en solution (6); et en ce qu'une trémie (9), depuis laquelle l'agent de précipitation peut être amené au réservoir de mise en solution (6) par l'intermédiaire d'un premier dispositif de dosage (10) muni d'un moteur M 1, est disposée au-dessus du réservoir de mise en solution (6).

7. Appareillage selon la revendication 6, caractérisé en ce que la conduite d'eau de dissolution (8) contient un dispositif de surveillance du débit FSA 2 mettant hors service le moteur M 1 du premier dispositif de dosage (10) lorsqu'il n'y a pas d'écoulement d'eau par cette conduite.

8. Appareillage selon l'une des revendications 4 à 7, caractérisé en ce que le signal de réglage agit par l'intermédiaire d'un élément d'adaptation S 1 sur le moteur M 1 du premier dispositif de dosage (10).

9. Appareillage selon l'une des revendications 4 à 8, caractérisé en ce que le signal de réglage agit par l'intermédiaire d'un élément de proportionnalité (15) sur la soupape à commande automatique (7) dans la conduite d'eau de dissolution (8).

10. Appareillage selon l'une des revendications 4 à 9, caractérisé en ce que le signal de réglage agit par l'intermédiaire d'un élément d'adaptation S 2 sur le moteur M 2 du second dispositif de dosage (11).

11. Appareillage selon l'une des revendications 4 à 10, caractérisé en ce qu'un commutateur (16) est agencé à l'intérieur du système régulateur (12) dans la conduite reliant la calculatrice (13) à l'organe de traitement (14), ce commutateur pouvant être actionné par une première unité de commande (17) comportant des dispositifs de surveillance de valeurs minimales et d'établissement de valeurs de substitution, et en ce qu'une valeur de substitution peut être communiquée par le commutateur (16) ouvert à l'organe de traitement (14).

12. Appareillage selon l'une des revendications 4 à 11, caractérisé en ce qu'un commutateur (18) est agencé dans la ligne pour faire sortir le signal de réglage du système régulateur (12), ce commutateur pouvant être actionné par une seconde unité de commande (19) comportant des dispositifs de surveillance de valeurs minimales et d'établissement de valeurs de substitution, et en ce qu'une valeur de substitution peut être communiquée par le commutateur (18) ouvert à l'organe de proportionnalité (15) et aux éléments d'adaptation S 1 et S 2.